# EUROPÄISCHE PATENTSCHRIFT

(11) **EP 1 680 308 B1**
(45) Veröffentlichungstag und Bekanntmachung des Hinweises auf die Patenterteilung: **04.07.2007**
(21) Anmeldenummer: 04818139.0
(22) Anmeldetag: 20.10.2004
(51) Int. Cl.: B60R 11/02

(54) **ADAPTER F R AUTORADIOS**
ADAPTER FOR CAR RADIOS
ADAPTATEUR POUR AUTORADIO

(30) Priorität: 05.11.2003 DE 10352169
(43) Veröffentlichungstag der Anmeldung: 19.07.2006
(73) Patentinhaber: SIEMENS AKTIENGESELLSCHAFT, 80333 München (DE)
(72) Erfinder: ROEMER, Michael, 35460 Staufenberg (DE)
(86) Internationale Anmeldenummer: PCT/EP2004/052587
(87) Internationale Veröffentlichungsnummer: WO 2005/044629

(56) Entgegenhaltungen:
- FR-A- 2 567 821
- FR-A- 2 592 345
- US-A- 4 726 789
- US-A- 5 441 421

## Beschreibung

Die Erfindung betrifft einen Adapter für die elektrischen Anschlüsse eines Autoradios.

Dokument US-A-5 441 421 offenbart einen Adapter für elektrische Anschlüße eines Autoradios, in dem elektrische Steckverbinder integriert sind, und der an einer Fahrzeugkomponente mechanisch befestigbar ist, die eine elektrische Verbindung zu dem Adapter aufweist.

Autoradios weisen an ihrer Rückseite Steckverbinder auf, mit denen eine Verbindung zu einem im Fahrzeug vorhandenen Kabelbaum hergestellt wird. Für die Steckverbinder gibt es unterschiedlichste Ausführungen bzw. Belegungen. Hierdurch ergibt sich das Problem, dass nicht jedes Autoradio ohne weiteres in jedem Fahrzeug angeschlossen werden kann, da die Steckverbinder am Autoradio und am Kabelbaum des Fahrzeuges unterschiedlich ausgelegt sind. Dies erschwert zum einen die Nachrüstung eines Autoradios durch den Endverbraucher, erfordert andererseits in der Erstausrüstung seitens des Autoradioherstellers eine ständige Anpassung der Steckverbinder an die unterschiedlich ausgelegten Steckverbinder verschiedener Fahrzeughersteller bzw. teilweise sogar an verschiedene Steckverbinder verschiedener Fahrzeugmodelle eines einzigen Herstellers. Als Folge davon sind unterschiedliche Gerätevarianten ausschließlich auf Grund der unterschiedlichen Steckverbinder erforderlich. Neben nicht unerheblichen Entwicklungs- und Werkzeugkosten führt dies auch zu einem erhöhten logistischen Aufwand.

Alternativ zu einer Anpassung der Steckverbinder des Autoradios an den speziellen Steckverbinder des Fahrzeugkabelbaumes können Adapterkabel eingesetzt werden, die an ihren Enden die jeweils kompatiblen Gegenstecker für das Autoradio bzw. den Kabelbaum aufweisen. Hierbei ist dann in der Regel für jede Steckverbindung ein separates Adapterkabel erforderlich, wor-aus ein erhöhter Steckaufwand während des Radioeinbaus und bei vormontierten Adapterkabeln eine unübersichtliche Einbausituation ("Kabelsalat") resultiert.

Aufgabe der Erfindung ist es daher, einen Adapter für elektrische Anschlüsse eines Autoradios anzugeben, der die vorgenannten Nachteile vermeidet und die Montage erleichtert.

Die Aufgabe wird bei einem Adapter für elektrische Anschlüsse eines Autoradios erfindungsgemäß dadurch gelöst, dass der Adapter als Kunststoffteil ausgeführt ist, in das elektrische Steckverbinder integriert sind und das an einer Fahrzeugkomponente mechanisch befestigbar ist, die keine elektrische Verbindung zu dem Adapter aufweist. Der Einsatz des erfindungsgemäßen Adapters ermöglicht die Nutzung von Autoradios in Fahrzeugen mit unterschiedlichen Steckverbindertypen, ohne die geräteseitigen Steckverbinder anzupassen und somit unterschiedliche Gerätevarianten zu generieren. Der erfinduzrgsgemäße Adapter ist als Kunststoffteil ausgeführt, das an einer Fahrzeugkomponente mechanisch befestigbar ist. Das Kunststoffteil weist verschiedene elektrische Steckverbinder auf, die sowohl die Gegenstecker für den Fahrzeugkabelbaum als auch für den Autoradiosteckverbinder aufweisen. Wird nun das Kunststoffteil an der Fahrzeugkomponente mechanisch befestigt, so kann zunächst der Steckverbinder des Fahrzeugkabelbaumes mit dem Adapter verbunden werden. Anschließend kann über ein Kabel die elektrische Verbindung des Steckverbinders des Autoradios mit dem Adapter erfolgen. Eine Anpassung der Steckverbinder des Autoradios an die Steckverbinder des Kabelbaumes ist daher nicht erforderlich. Zudem wird durch die Befestigung des Adapters an einer Fahrzeugkomponente eine definierte Einbaulage geschaffen, die deutlich übersichtlicher ist als bei der Verwendung von Adapterkabeln.

Bei der Fahrzeugkomponente handelt es sich vorzugsweise um einen Radioschacht, wobei das Kunststoffteil zum Aufstecken auf den Radioschacht ausgebildet ist. Weist das Fahrzeug somit zwei Radioschächte auf, so kann in den einen Radioschacht das Autoradio eingebaut werden und auf den zweiten Radioschacht, der beispielsweise als Ablage dient, kann rückseitig das Kunststoffteil aufgesteckt werden. Wird das Kunststoffteil quaderförmig mit einer offenen Außenwand ausgebildet, so ergibt sich eine besonders einfache Möglichkeit, das Kunststoffteil an die Abmessungen eines Radioschachtes oder einer anderen geeigneten Kraftfahrzeugkomponente anzupassen und auf diese aufzustecken.

Der Adapter weist vorzugsweise mindestens zwei mehrpolige elektrische Steckverbinder unterschiedlicher Kontaktanordnung und/oder Kontaktbelegung auf. Hierbei kann einer der elektrischen Steckverbinder die Kontaktanordnung bzw. Kontaktbelegung des Steckverbinders des Autoradios aufweisen, während der zweite Steckverbinder die Kontaktanordnung bzw. Kontaktbelegung eines entsprechenden Steckverbinders des Fahrzeugkabelbaumes aufweist.

Weiterhin kann der Adapter eine Antennenbuchse und einen über eine selbsttragende Verbindungsleitung mit der Antennenbuchse verbundenen Antennenstecker aufweisen. Insbesondere kann dabei der Adapter Mittel für eine Antennen-Phantomspeisung enthalten, so dass auch ein Autoradio, das an sich nicht für eine Antennen-Phantomspeisung ausgelegt ist, während im Fahrzeug eine solche jedoch vorgesehen ist, in dem Fahrzeug verwendet werden kann und die Vorteile der Antennen-Phantomspeisung erhalten bleiben.

Weiterhin kann der Adapter Mittel zur Realisierung eines CAN-Bus-Anschlusses enthalten. Auch hier kann ein Autoradio, das an sich keinen CAN-Bus-Anschluss aufweist, an einen CAN-Bus eines Fahrzeuges angeschlossen werden und alle damit verbundenen Vorteile realisieren. Sind somit herstellerseitig Autoradios mit einem CAN-Bus-Anschluss vorgesehen, so kann in der Nachrüstung unter Einsatz des erfindungsgemäßen Adapters mit Mitteln zur Realisierung eines CAN-Bus-Anschlusses auch ein Radio ohne CAN-Bus eingesetzt werden, ohne dass Nachteile gegenüber einem serienmäßigen Autoradio in Kauf genommen werden müssen.

Die Erfindung wird nachfolgend anhand eines Ausführungsbeispiels und der Zeichnung näher beschrieben. Es zeigen:
- Figur 1: eine erste Ansicht eines erfindungsgemäßen Adapters;
- Figur 2: eine zweite Ansicht eines erfindungsgemäßen Adapters;
- Figur 3: den Einsatz des Adapters mit einem Doppel-DIN-Einbaurahmen.

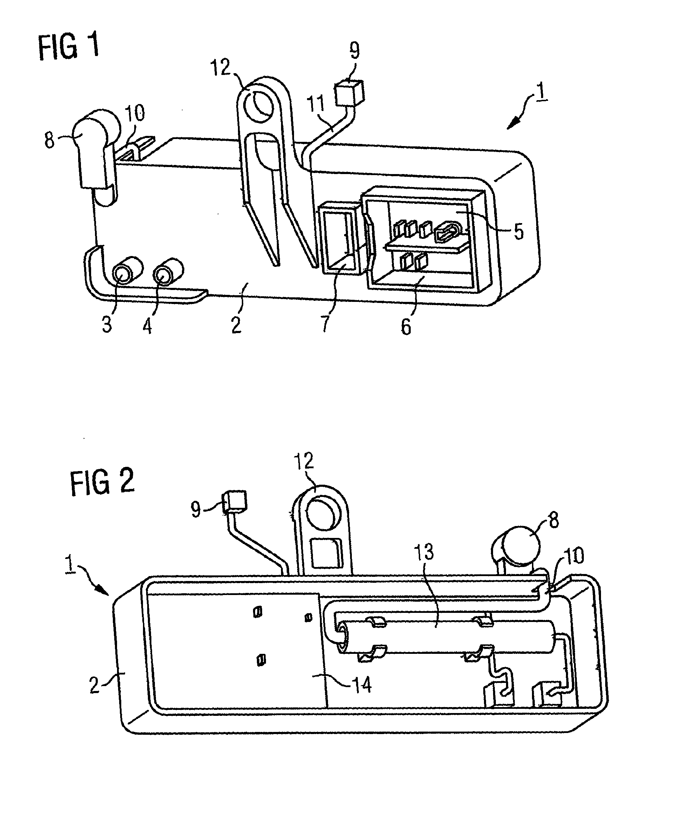

Figur 1 zeigt einen erfindungsgemäßen Adapter 1, bei dem in ein Kunststoffteil 2 mehrere Steckverbinder integriert sind. Für den Anschluss entsprechender Steckverbinder eines Kabelbaumes eines Fahrzeuges enthält der Adapter 1 Amtennensteckverbinder 3, 4 sowie zwei mehrpolige Steckverbinder 5, 6. Ein weiterer Steckverbinder 7 entspricht hinsichtlich seiner Anschlussbelegung und -anordnung einem Geräteanschlussblock eines Autoradios und ist für die Verbindung mit dem Autoradio mittels eines Kabels vorgesehen. Die weiteren Steckverbinder 8, 9 sind für den Anschluss des Adapters 1 an entsprechende Antennensteckverbinder des Autoradios vorgesehen. Im Gegensatz zu den Steckverbindern 3-7, die direkt in das Kunststoffteil 2 integriert sind, sind die Steckverbinder 8, 9 über selbsttragende Verbindungsleitungen 10, 11 mit den entsprechenden Steckverbindern 3, 4 verbunden.

Figur 2 zeigt eine Rückansicht des Adapters 1. Daraus ist ersichtlich, dass das Kunststoffteil 2 des Adapters 1 im Wesentlichen quaderförmig ausgebildet ist, wobei eine der Außenwände offen ist. Die Abmessungen des Kunststoffteils 2 sind so gewählt, dass dieses auf einen Einbauschacht in einem Kraftfahrzeug aufsteckbar ist und dort sicher fixiert ist.

Der Adapter 1 enthält weiterhin eine Phantomspeiseanordnung 13 zur Phantomspeisung einer Antenne. Die Phantomspeiseanordnung 13 ist in das Kunststoffteil 2 eingeklipst und elektrisch mit den Antennenverbindern 3, 8 verbunden. Somit wird durch den Adapter 1 unabhängig vom verwendeten Autoradio eine Antennen-Phantomspeisung zur Verfügung gestellt. Weiterhin ist in das Kunststoffteil 2 eine Leiterplatte 14 eingepasst, auf der elektronische Bauelemente zur Realisierung eines CAN-Bus-Anschlusses vorhanden sind. In Figur 2 ist die Rückseite der Leiterplatte 14 sichtbar, während die Bauelemente auf der nicht sichtbaren Vorderseite angeordnet sind. Die Leiterplatte 14 ist elektrisch mit den Steckverbindern 7 bzw. 5, 6 verbunden.

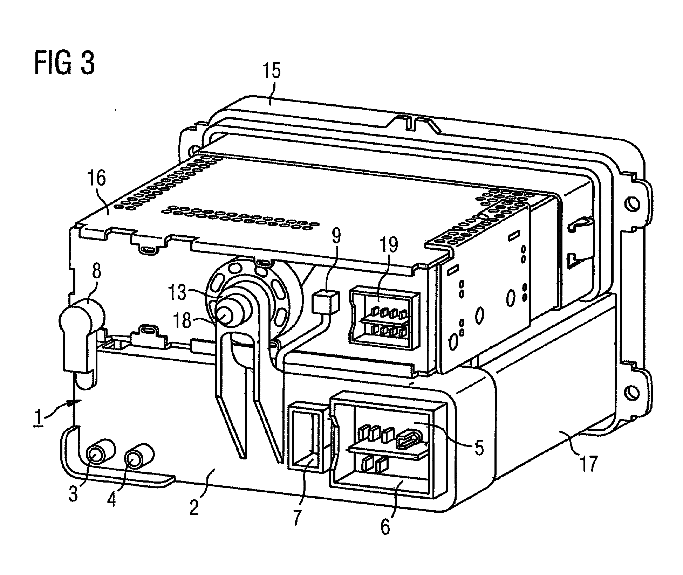

Figur 3 zeigt einen Doppel-DIN-Einbaurahmen 15 eines Kraftfahrzeuges, in den im oberen Teil ein Autoradio 16 eingebaut ist. In den unteren Teil des Einbaurahmens 15 kann ein weiteres Gerät mit den äußeren Abmessungen eines Autoradios eingebaut werden. Im Beispiel wird der untere Radioschacht 17 jedoch lediglich als Ablagefach genutzt, wobei auf den Radioschacht 17 das Kunststoffteil 2 des Adapters 1 aufgesteckt ist. Ein weiteres Halteelement 13 des Kunststoffteils 2 ist auf ein entsprechendes Halteelement 18 des Autoradios aufgesteckt und gewährleistet einen zusätzlichen Halt des Adapters 1. Die Antennensteckverbinder 8, 9 des Adapters 1 sind direkt auf entsprechende Steckverbinder des Autoradios 16 aufgesteckt. In einfacher Weise kann nunmehr mittels eines Kabels der Steckverbinder 7 mit dem gleichartigen Steckverbinder 19 des Autoradios 16 verbunden werden. In die Steckverbinder 5, 6 des Adapters 1 können dann die entsprechenden Steckverbinder eines Fahrzeugkabelbaumes eingesteckt werden.

Mit dem erfindungsgemäßen Adapter ergibt sich somit auch bei unterschiedlichen Anschlüssen des Autoradios und eines Fahrzeugkabelbaumes eine übersichtliche Einbausituation, ohne dass die Anschlüsse des Radios an den Kabelbaum des Fahrzeuges direkt angepasst werden.

## Patentansprüche

1. Adapter für elektrische Anschlüsse eines Autoradios, **dadurch gekennzeichnet, dass** der Adapter (1) als Kunststoffteil (2) ausgeführt ist, in das elektrische Steckverbinder (3-7) integriert sind und das an einer Fahrzeugkomponente mechanisch befestigbar ist, die keine elektrische Verbindung zu dem Adapter (1) aufweist.

2. Adapter nach Anspruch 1, **dadurch gekennzeichnet, dass** die Fahrzeugkomponente ein Radioschacht (17) ist und das Kunststoffteil (2) zum Aufstecken auf den Radioschacht (17) ausgebildet ist.

3. Adapter nach einem der vorhergehenden Ansprüche, **dadurch gekennzeichnet, dass** das Kunststoffteil (2) quaderförmig mit einer offenen Außenwand ausgebildet ist.

4. Adapter nach einem der vorhergehenden Ansprüchen, **dadurch gekennzeichnet, dass** der Adapter (1) mindestens zwei mehrpolige elektrische Steckverbinder (5-7) unterschiedlicher Kontaktanordnung und/der Kontaktbelegung aufweist.

5. Adapter nach einem der vorhergehenden Ansprüchen, **dadurch gekennzeichnet, dass** der Adapter (1) eine Antennenbuchse (2, 3) und einen über eine selbsttragende Verbindungsleitung (10, 11) mit der Antennenbuchse (2, 3) verbundenen Antennenstecker 8, 9) aufweist.

6. Adapter nach einem der vorhergehenden Ansprüche, **dadurch gekennzeichnet , dass** der Adapter (1) Mittel zur Realisierung eines CAN-Bus-Anschlusses enthält.

7. Adapter nach einem der vorhergehenden Ansprüche, **dadurch gekennzeichnet, dass** der Adapter (1) Mittel für eine Antennen-Phantomspeisung enthält.

## Claims

1. Adapter for electrical connections of a car radio, **characterized in that** the adapter (1) is in the form of a plastic part (2) in which electrical plug-in connectors (3-7) are integrated and which can be mechanically fixed to a vehicle component which does not have an electrical connection to the adapter (1).

2. Adapter according to Claim 1, **characterized in that** the vehicle component is a radio slot (17) and the plastic part (2) is designed to be fitted to the radio slot (17).

3. Adapter according to one of the preceding claims, **characterized in that** the plastic part (2) is of cuboidal design and has an open outer wall.

4. Adapter according to one of the preceding claims, **characterized in that** the adapter (1) has at least two multipole electrical plug-in connectors (5-7) having a different contact arrangement and/or contact assignment.

5. Adapter according to one of the preceding claims, **characterized in that** the adapter (1) has an antenna socket (2, 3) and an antenna connector (8, 9) which is connected to the antenna socket (2, 3) via a self-supporting connecting line (10, 11).

6. Adapter according to one of the preceding claims, **characterized in that** the adapter (1) contains means for implementing a CAN bus connection.

7. Adapter according to one of the preceding claims, **characterized in that** the adapter (1) contains means for antenna phantom powering.

## Revendications

1. Adaptateur pour raccordements électriques d'un poste autoradio, **caractérisé par** l e fait que l'adaptateur (1) est exécuté en tant que pièce en matière plastique (2) dans laquelle sont intégrés des connecteurs électriques enfichables (3 - 7) et que ladite pièce en matière plastique peut être fixée mécaniquement à un constituant du véhicule qui n'a pas de liaison électrique vers l'adaptateur (1).

2. Adaptateur selon la revendication 1, **caractérisé par le fait que** le constituant du véhicule est un logement (17) pour poste autoradio et que la pièce en matière plastique (2) est constituée pour être enfichée sur le logement (17) pour poste autoradio.

3. Adaptateur selon l'une des revendications précédentes, **caractérisé par le fait que** la pièce en matière plastique (2) est parallélépipédique avec une paroi extérieure ouverte.

4. Adaptateur selon l'une des revendications précédentes, **caractérisé par le fait que** l'adaptateur (1) comporte au moins deux connecteurs électriques enfichables et multibroches (5 - 7) ayant une disposition et / ou une occupation des contacts différentes.

5. Adaptateur selon l'une des revendications précédentes, **caractérisé par le fait que** l'adaptateur (1) comporte une prise d'antenne (2, 3) et une fiche d'antenne (8, 9) reliée, par l'intermédiaire d'un conducteur de liaison autoportant (10, 11), à la prise d'antenne (2, 3).

6. Adaptateur selon l'une des revendications précédentes, **caractérisé par le fait que** l'adaptateur (1) comprend des moyens pour la réalisation d'un raccordement sur bus CAN.

7. Adaptateur selon l'une des revendications précédentes, **caractérisé par le fait que** l'adaptateur (1) comprend des moyens pour une alimentation d'antenne en fantôme.
